Europäisches Patentamt

European Patent Office

Office européen des brevets

(11) Veröffentlichungsnummer: **0 302 280**

**A2**

## (12) EUROPÄISCHE PATENTANMELDUNG

(21) Anmeldenummer: 88111379.9

(22) Anmeldetag: 15.07.88

(51) Int. Cl.⁴: **B01D 53/04 , D06F 43/08**

(30) Priorität: 07.08.87 DE 3726245

(43) Veröffentlichungstag der Anmeldung:
08.02.89 Patentblatt 89/06

(84) Benannte Vertragsstaaten:
**ES FR GB IT NL**

(71) Anmelder: **Böwe Reinigungstechnik GmbH**
**Haunstetterstrasse 112**
**D-8900 Augsburg(DE)**

(72) Erfinder: **Führing, Heinrich**
**Waldfriedenstrasse 7 1/2**
**D-8900 Augsburg(DE)**

(54) **Verfahren und Vorrichtung zum Rückgewinnen von Lösemittelgasen aus einem Luftstrom.**

(57) Die Erfindung betrifft ein Verfahren und eine Vorrichtung zum Rückgewinnen von Lösemittelgasens bei der Trockung von mit einem organischen Lösemittel behandelter Ware mit Hilfe eines Luftstroms in einer Chemischreinigungsmaschine oder dergleichen. In einer solchen Maschine wird die Ware durch einen in einem geschlossenen Leitungskreislauf umlaufenden Luftstrom, der vor dem Kontakt mit der Ware erwärmt und danach zwecks Kondensation der aufgenommenen Lösemittelgase wieder abgekühlt wird, getrocknet. In einer zweiten Phase der Rückgewinnung, der sogenannten Reduktionsphase, wird die Ware dann durch Abschalten der Erwärmung gekühlt. Zur Rückgewinnung der restlichen, nach der Kühlung noch in der Luft verbliebenen Lösemittelgase wird der Luftstrom dann anschließend über eine Adsorptionseinrichtung geleitet. Die Erfindung besteht darin, daß während der Kühlung nur ein Teil der gekühlten Luft der Adsorption zugeführt und danach wieder in den über die Ware zirkulierenden Luftkreislauf zurückgeführt wird. Dies wird dadurch erreicht, daß in einem zu dem Kreislauf parallelen, einer Adsorptionseinrichtung (11) aufweisenden Leitungszweig ein weiterer Ventilator (10) vorgesehen ist, und die Saugzug führende, mit dem Eingang der Adsorptionseinrichtung (11) verbundene Leitung (9) an den Leitungskreislauf - in Umlaufrichtung gesehen - nach dem Luftkühler (5) im Bereich der Einführung des Luftstroms in den Behandlungsbehälter (1) anschließbar ist.

Fig. 1

## Verfahren und Vorrichtung zum Rückgewinnen von Lösemittelgasen aus einem Luftstrom

Die Erfindung betrifft ein Verfahren und eine Vorrichtung zum Rückgewinnen von Lösemittelgasen aus einem Luftstrom bei der Trocknung von mit einem organischen Lösemittel behandelter Ware in einer Chemisch-Reinigungsmaschine oder dergleichen, bei welchem der Luftstrom in einem Kreislauf nach Erwärmung und Kontakt mit der in einem Behandlungsbehälter befindlichen Ware zwecks Kondensation des vom Luftstrom aufgenommenen Lösemittels gekühlt, wieder erwärmt und erneut im Kreislauf über die Ware geführt wird, worauf dann in einer weiteren Rückgewinnungsphase die nach der Kondensation noch im Luftstrom verbliebenen Lösemittelgase durch Adsorption entfernt werden. Die zu behandelnde Ware kann verschiedener Art sein, z. B. Textilien, Werkstücke, elektronische Bauteile usw. Als Lösemittel kommen in der Regel fluorierte oder chlorierte Kohlenwasserstoffe, z. B. Perchlorethylen, in Frage.

Ein solches Verfahren und eine entsprechende Vorrichtung hierfür sind bereits durch die DE-PS 3609587 bekannt. Mit der dort bekannten Vorrichtung werden nach dem Trocknen noch die letzten Lösemittelgasreste aus dem in einem geschlossenen Kreislauf über die Ware zirkulierenden Luftstrom durch Adsorption entnommen. In besonderer Ausführung ist auch die Regenerierung der hierzu erforderlichen Adsorptionseinrichtung mit Heißluft in einem geschlossenen Kreislauf mit Hilfe des in dem Luftschacht der Maschine vorhandenen Luft -erhitzers und Luftkühlers möglich, so daß keine lösemittelhaltige Luft nach außen dringt.

Nachteilig ist jedoch bei der vorbekannten Anordnung der hierzu erforderliche Aufwand. Nach jeder Charge muß die Adsorptionseinrichtung regeneriert bzw. das darin befindliche Lösemittel desorbiert werden, da diese Einrichtung aus Platzgründen nicht beliebig groß gemacht werden dann. Soll die Regenerierung mit Heißluft unter Verwendung des für die Warentrocknung in der Maschine befindlichen Lufterhitzers und Luftkühlers erfolgen, so ist eine platzbedürftige, parallel zum Behandlungsbehälter verlaufende Bypass-Leitung erforderlich. Es muß auch der Luftschacht der Maschine mit entsprechend großen Absperrklappen während eines jeden Waschvorganges vom Behälter abgetrennt werden, damit nicht beim Waschen aufsteigende Lösemitteldämpfe in den während dieser Zeit ablaufenden Regenerierungsbzw. Desorptionskreislauf eindringen. Diese Absperrklappen sind auch erforderlich bei Verwendung eines mit Kältemittel gekühlten Luftkühlers, da sonst nach der Trocknung die von dem vereisten Kühler verdampfenden Lösemittelgase wieder zurück in den Behandlungsbehälter gelangen und beim Entladen des Behälters in unerwünschter Weise nach außen ins Freie dringen.

Der Erfindung liegt die Aufgabe zugrunde, bei einem Verfahren und einer Vorrichtung der eingangs genannten Art eine wirksame Verminderung der in der Maschine nach dem Trocknen noch verbleibenden Lösemittelrestgaskonzentration mit geringerem, d. h. ohne den vorerwähnten Aufwand zu erreichen.

Die erfindungsgemäße Lösung dieser Aufgabe besteht darin, daß bei dem Verfahren nach Ablauf einer vorbestimmten Trockenzeit der Kreislauf ohne Erwärmung fortgesetzt wird, wobei nur ein Teil des weiterhin gekühlten Luftstroms aus dem Kreislauf entnommen und zur Adsorption der in ihm enthaltenen Restgaskonzentration geführt wird und nach Adsorption wieder in den über die Ware zirkulierenden Kreislauf zurückgeführt wird.

Gemäß der Erfindung werden also zwei voneinander unabhängig einstellbare Luftkreisläufe einander überlagert, die nur eine gleichsinnig durchströmte Strecke im Luftschacht gemeinsam haben, auf der sich beide Luftströme miteinander mischen. Im Unterschied zu vorbekannten Verfahren und Vorrichtungen wird die Adsorptionseinrichtung nicht mehr vom gesamten, gekühlten und über die Ware zirkulierenden Luftstrom durchsetzt. Ein Großteil der verbliebenen Restgasmenge wird hierdurch noch während der Abkühlung der Ware auskondensiert. Nur ein geringer Teil hiervon geht in die Adsorptionseinrichtung, wobei sich wegen der gleichzeitigen Kühlung der Luft ein guter Wirkungsgrad der Adsorption ergibt. Die Adsorptionseinrichtung wird daher pro Charge nur mit einer entsprechend kleinen Lösemittelgasmenge beladen, so daß sie erst nach einer größeren Anzahl von Chargen wieder entladen bzw. regeneriert werden muß (Mehrchargenbetrieb).

Bei Entnahme der zur Adsorption geführten Luft am Erhitzerausgang und Zuführung am Kondensatoreingang (in Umlaufrichtung des zirkulierenden Luftstroms gesehen) ist daher eine Heißluftregenerierung der Adsorptionseinrichtung unter Verwendung des in der Maschine befindlichen Lufterhitzers und Luftkühlers möglich, ohne daß, wie früher, ein besonderer Bypass und Absperrklappen erforderlich sind, da diese Regenerierung während einer Betriebspause erfolgen kann. Die nach Adsorption dem über die Ware zirkulierenden Luftstrom vor Eintritt in den Behandlungsbehälter zugemischte Frischluft verdünnt die Restgaskonzentration erheblich.

Eine weitere Erhöhung des Wirkungsgrades der Rückgewinnung wird erfindungsgemäß noch dadurch erreicht, daß die Menge des pro Sekunde über die Ware zirkulierenden Luftstroms während der Dauer der Adsorption vermindert wird.

Eine vorteilhaft ausgebildete Vorrichtung zur Durchführung des erfindungsgemäßen Verfahrens besteht im wesentlichen aus einer Maschine zum Behandeln von Ware mit einem organischen Lösemittel, bei welcher ein geschlossener Leitungskreislauf, der von einem die Ware aufnehmenden Behandlungsbehälter über einen Luftkühler und einen Lufterhitzer wieder zurück zu dem Behandlungsbehälter verläuft, mit einem Ventilator zum Umwälzen des Luftstroms vorgesehen ist, wobei eine Adsorptionseinrichtung mittels Leitungen unter Bildung eines parallel verlaufenden Leitungszweiges an den Leitungskreislauf anschließbar ist. Zur Lösung der vorgenannten Aufgabe ist hierbei erfindungsgemäß in dem die Adsorptionseinrichtung aufweisenden Leitungszweig ein weiterer Ventilator vorgesehen, und weiterhin ist die Saugzug führende, mit dem Eingang der Adsorptionseinrichtung verbundene Leitung an den Leitungskreislauf - in Umlaufrichtung gesehen - nach dem Luftkühler im Bereich der Einführung des Luftstroms in den Behandlungsbehälter anschließbar ist.

Die Saugleitung zur Adsorptionseinrichtung kann also unmittelbar zwischen Luftkühlerausgang und Lufterhitzereingang an den Kreislauf angeschlossen sein. Es ist aber auch möglich, sie unmittelbar am Behältereingang anzuschließen, da ja während der Adsorption der Lufterhitzer abgeschaltet wird. Die letztgenannte Variante bietet auch die Möglichkeit einer Regenerierung der Adsorptionseinrichtung mit Heißluft im geschlossenen Kreislauf unter Verwendung des Luftkühlers und des Lufterhitzers im Luftschacht. Günstig ist es, wenn der Lufterhitzer durch eine Bypass-Leitung überbrückbar ist, da dann der Luftkühlerausgang und der Anschluß der zur Adsorptionseinrichtung führende Saugleitung unmittelbar am Behandlungsbehältereingang liegen. Vorteilhafterweise ist der die Adsorptionseinrichtung aufweisende Leitungszweig gegenüber dem Leitungskreislauf absperrbar ausgebildet.

Um eine möglichst starke Kühlung zu erreichen, empfiehlt es sich, den Ausgang der Adsorptionseinrichtung - in Umlauf gesehen - vor dem Eingang des Luftkühlers an den Leitungskreislauf anzuschließen. Es kann aber auch vorteilhaft sein, den Ausgang der Adsorptionseinrichtung, zumindest zeitweise, wenn der Luftkühler bei immer stärkerer Kühlung im Laufe der Rückgewinnung allmählich vereist, und das auf der Kühleroberfläche gefrorene Lösemittel wieder zu verdampfen beginnt, in Umlaufrichtung gesehen, nach dem Luftkühler an den Leitungskreislauf anzuschließen, so daß der vereiste Kühler von dem Adsorptions-(Teil-) Luftstrom umgangen wird. Günstig für das Be- und Entladen der Maschine ist es, die mit dem Eingang der Adsorptionseinrichtung verbundene Leitung unmittelbar am Behandlungsbehälter, vorzugsweise im Bereich der Ladetüre des Behand-lungsbehälters an den Leitungskreislauf anzu-schließen. Im Rahmen der Erfindung ist es selbstverständlich möglich, daß, ergänzend zu den vorgenannten Maßnahmen, die mit dem Eingang der Adsorptionseinrichtung verbundene Leitung an den Leitungskreislauf - in Umlaufrichtung gesehen - auch im Bereich zwischen dem Behandlungsbehälter und dem Ventilator anschließbar ist, so daß, wie bei vorbekannten Einrichtungen, ein über den Behandlungsbehälter führender Adsorptionskreislauf bei Bedarf hergestellt werden kann.

Die Erfindung ist in der Zeichnung beispielsweise und schematisch dargestellt. Es zeigen:

Figur 1: Eine Chemisch-Reinigungs-Ma-schine mit einem erfindungsgemäßen Leitungssy-stem

Figur 2: Einen Schnitt gemäß der Linie II-II in Figur 1

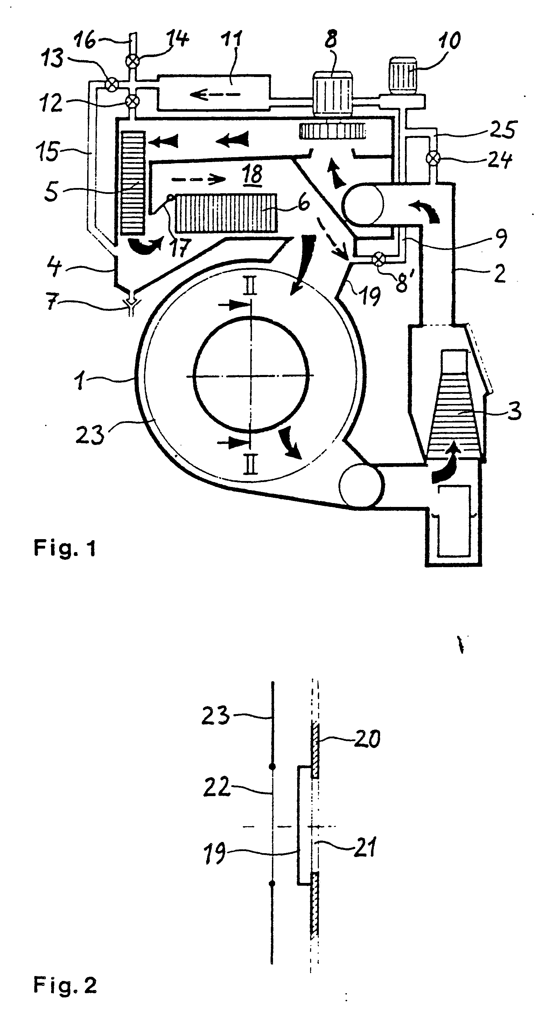

In Figur 1 ist als Behandlungsbehälter das Trommelgehäuse 1 einer Chemisch-Reinigungs-Maschine vorgesehen. In dem Trommelgehäuse 1 ist in bekannter Weise eine rotierbare Trommel 23 gelagert, in der sich die zu behandelnde Ware befindet.

An das Trommelgehäuse 1 ist eine über ein Flusenfilter 3 führende Absaugleitung 2 angeschlossen. Diese Leitung führt zu einem auf dem Trommelgehäuse angeordneten Luftschacht 4, der einen Luftkühler 5 und einen Lufterhitzer 6 enthält. Dieser Luftschacht 4 bildet zusammen mit der Leitung 2 und dem Behandlungsbehälter 1 einen geschlossenen Leitungskreislauf. Mit 7 ist ein Ablauf zu einem Wasserabscheider bezeichnet.

Durch einen ebenfalls im Luftschacht 4 vorgesehenen Ventilator 8 wird nach dem üblichen Wasch- und Schleudervorgang zum Trocknen der im Trommelgehäuse 1 befindlichen Ware ein Luftkreislauf gemäß den dicken schwarzen Pfeilen in Figur 1 erzeugt, durch den in bekannter Weise die Ware mit erwärmter Luft aus dem Lufterhitzer 6 getrocknet wird, und mit dem das aus der Ware und aus dem Trommelgehäuse aufgenommene Lösemittel zum Luftkühler 5 geführt und dort durch Kondensation zurückgewonnen wird.

An den Luftschacht 4 ist im Bereich des Eingangs des Trommelgehäuses 1 - bei dem dargestellten Beispiel unmittelbar an den in das Trommelgehäuse führenden Einführungsstutzen 19 - eine zur Saugseite eines Ventilators 10 führende, durch ein Ventil 8' absperrbar Leitung 9 angeschlossen. Die Druckseite des Ventilators 10 liegt am Eingang eines Adsorbers 11, dessen Ausgang mit Hilfe von Ventilen 12, 13 oder 14 wahlweise an den Eingang des Luftkühlers 5 oder über eine Leitung 15 an den Ausgang des Luftkühlers oder an eine ins Freie führende Leitung 16 anschließbar ist. Im Luftschacht 4 ist ferner am Eingang des Erhitzers 6 eine Absperrklappe 17 vorgesehen, deren Betätigung den Erhitzer 6 sperrt und von dem Kreislauf abtrennt und dafür einen By-Pass 18 freigibt, durch den der Erhitzer umgangen wird.

Nach der üblichen Trocknung der Ware durch erwärmte Luft schließt sich die sogenannte Reduktionsphase an, bei der der Erhitzer abgeschaltet bzw. - wie bei dem dargestellten Beispiel - über den By-Pass 18 umgangen wird, so daß die vorher durch den Luftstrom erwärmte Ware allmählich abgekühlt wird. Während dieser Reduktionsphase wird durch Öffnen der Ventile 8' und 12 - oder 13, wenn der Luftkühler 5 vereist ist - und durch Einschalten des Ventilators 10 ein Teil der gekühlten Luft über den Adsorber 11 geführt (gestrichelte Pfeile in Figur 1). Durch entsprechende Einstellung der Förderleistungen der Ventilatoren 8 und 10 kann ein gewünschtes Verhältnis der durch den Adsorber 11 und der durch das Trommelgehäuse 1 strömenden, gekühlten Luftmenge erzeugt werden, so daß von den von der Ware noch weiterhin abgehenden Lösemittelgasen ein Teil noch auskondensiert werden kann.

Beim Entladen wird nach Öffnen des Ventils 14 die über die geöffnete Ladetüre durch den Ventilator angesaugte Luft über die Leitung 16 ins Freie geblasen. Hierbei wird durch den erfindungsgemäßen Anschluß der zum Eingang des Adsorbers führenden Saugleitung 9 im Bereich des Trommeleingangs, insbesondere an den Einführungsstutzen 19, der Austritt lösemittelhaltiger Luft aus dem Trommelgehäuse 1 besonders vorteilhaft verhindert. Der Einführungsstutzen 19 ist bekanntlich bei den meisten Maschinen an der Innenseite der Vorderwand 20 des Trommelgehäuses 1 als flache Leitung mit schmalen, rechteckförmigem Querschnitt bis an den Rand der Beladeöffnung 21 geführt, die sich der Öffnung 22 in der Vorderwand der Trommel 23 gegenüber befindet (Figur 2). Es wird daher beim Öffnen der Ladetüre durch den Ventilator 10 im wesentlichen eine überwiegend quer zur Beladeöffnung verlaufende Luftströmung erzeugt, die wie ein über die Öffnung erstreckter Luftvorhang wirkt, während die Luftmasse im Gehäuseinneren nur wenig bewegt wird. Erforderlichenfalls kann die Leitung 9 direkt im Bereich der Beladeöffnung an den Behandlungsbehälter angeschlossen werden.

Ergänzend ist bei dem dargestellten Beispiel noch eine mit der Leitung 2 durch ein Ventil 24 verbindbare Leitung 25 vorgesehen, die ebenfalls zum Saugeingang des Ventilators 10 führt, so daß zusätzlich noch ein an sich bekannter, über das Trommelgehäuse 1 geführter Adsorptionskreislauf bei Bedarf herstellbar ist, um eine möglichst vielseitige Anwendbarkeit der Adsorptionseinrichtung zu erreichen.

## Ansprüche

1. Verfahren zum Rückgewinnen von Lösemittelgasen aus einem Luftstrom bei der Trocknung von mit einem organischen Lösemittel behandelter Ware in einer Chemisch-Reinigungs-Maschine oder dgl., bei welchem der Luftstrom in einem Kreislauf nach Erwärmung und Kontakt mit der Ware zwecks Kondensation des aufgenommenen Lösemittels gekühlt, wieder erwärmt und erneut im Kreislauf über die Ware geführt wird, worauf die nach der Kondensation verbliebenen Lösemittelgase durch Adsorptionen entfernt werden, **dadurch gekennzeichnet**, daß nach Ablauf einer vorbestimmten Trockenzeit der Kreislauf ohne Erwärmung fortgesetzt wird, wobei nur ein Teil des weiterhin gekühlten Luftstroms aus dem Kreislauf entnommen und zur Adsorption der in ihm enthaltenen Restgaskonzentration geführt wird und nach Adsorption wieder in den über die Ware zirkulierenden Kreislauf zurückgeführt wird.

2. Verfahren nach Anspruch 2, **dadurch gekennzeichnet**, daß die Menge des pro Sekunde über die Ware zirkulierenden Luftstroms während der Dauer der Adsorption vermindert wird.

3. Vorrichtung zur Durchführung des Verfahrens nach Anspruch 1 oder 2, bestehend aus einer Maschine zum Behandeln von Ware mit einem organischen Lösemittel, bei welcher ein geschlossener Leitungskreislauf, der von einem die Ware aufnehmenden Behandlungsbehälter (1) über einen Luftkühler (5) und einen Lufterhitzer (6) wieder zurück zu dem Behandlungsbehälter (1) verläuft, mit einem Ventilator (8) zum Umwälzen des Luftstroms vorgesehen ist, wobei eine Adsorptionseinrichtung (11) mittels Leitungen (9, 15) unter Bildung eines parallel verlaufenden Leitungszweiges an den den Leitungskreislauf anschließbar ist, **dadurch gekennzeichnet**, daß in dem die Adsorptionseinrichtung (11) aufweisenden Leitungszweig ein weiterer Ventilator (10) vorgesehen ist, und daß die Saugzug führende, mit dem Eingang der Adsorptionseinrichtung (11) verbundene Leitung (9) an den Leitungskreislauf - in Umlaufrichtung gesehen - nach dem Luftkühler (5) im Bereich der Einführung des Luftstroms in den Behandlungsbehälter (1) anschließbar ist.

4. Vorrichtung nach Anspruch 3, **dadurch gekennzeichnet**, daß der Lufterhitzer (6) durch eine Bypass-Leitung (8) überbrückbar ist.

5. Vorrichtung nach Anspruch 3 oder 4, **dadurch gekennzeichnet**, daß der die Adsorptionseinrichtung (11) aufweisende Leitungszweig gegenüber dem Leitungskreislauf absperrbar ist.

6. Vorrichtung nach Anspruch 3 oder folgenden, **dadurch gekennzeichnet**, daß der Ausgang der Adsorptionseinrichtung (11) - in Umlaufrichtung gesehen - vor dem Eingang des Luftkühlers (5) an den Leitungskreislauf anschließbar ist.

7. Vorrichtung nach Anspruch 3 oder einem der folgenden, **dadurch gekennzeichnet**, daß der Ausgang der Adsorptionseinrichtung (11) - in Umlaufrichtung gesehen - nach dem Kühler (5) an den Leitungskreislauf anschließbar ist.

8. Vorrichtung nach Anspruch 3 oder einem der folgenden, **dadurch gekennzeichnet**, daß die mit dem Eingang der Adsorptionseinrichtung (11) verbundene Leitung (9) unmittelbar am Behandlungsbehälter (1), vorzugsweise im Bereich der Ladetüre des Behandlungsbehälters (1) an den Leitungskreislauf anschließbar ist.

9. Vorrichtung nach Anspruch 3 oder einem der folgenden, **dadurch gekenn zeichnet**, daß die mit dem Eingang der Adsorptionseinrichtung (11) verbundene Leitung (9) an den Leitungskreislauf - in Umlaufrichtung gesehen - im Bereich zwischen dem Behandlungsbehälter (1) und dem Ventilator (8) anschließbar ist.

**Fig. 1**

**Fig. 2**